(19) Europäisches Patentamt
European Patent Office
Office européen des brevets

(11) Numéro de publication : **0 493 995 A1**

# (12) DEMANDE DE BREVET EUROPEEN

(21) Numéro de dépôt : **91403369.1**

(51) Int. Cl.$^5$ : **C08G 77/62,** C04B 35/58

(22) Date de dépôt : **12.12.91**

(30) Priorité : **19.12.90 FR 9015924**

(43) Date de publication de la demande :
**08.07.92 Bulletin 92/28**

(84) Etats contractants désignés :
**AT BE CH DE DK ES FR GB GR IT LI LU NL SE**

(71) Demandeur : **ELF ATOCHEM S.A.**
**4 & 8, Cours Michelet La Défense 10**
**F-92800 Puteaux (FR)**

(72) Inventeur : **Pons, Pierrette**
**7 Boulevard Sully**
**F-78200 Mantes la Jolie (FR)**
Inventeur : **Waegell, Marie-Bernard**
**16 Avenue Pastré**
**F-13900 Marseille (FR)**
Inventeur : **Colombier, Christian**
**3 Rue de Sèze**
**F-69006 Lyon (FR)**

(74) Mandataire : **Rochet, Michel**
**ELF ATOCHEM S.A. Département Propriété Industrielle 4-8, Cours Michelet La Défense 10 - Cedex 42**
**F-92091 Paris-La-Défense (FR)**

## (54) Poly(organosilylhydrazines) réticulés et leur procédé de préparation.

(57) L'invention concerne le domaine des céramiques et plus précisément des précurseurs réticulés. Ces précurseurs sont des poly(organosilylhydrazines) réticulés au moyen d'un réactif métallique. Ces produits réticulés présentent un rendement élevé en céramique après pyrolyse.

EP 0 493 995 A1

L'invention concerne le domaine des précurseurs de céramique et plus précisément des poly (organosilylhydrazine) réticulés.

Dans le présent exposé, le terme poly (organosilylhydrazine) est utilisé pour désigner un composé comprenant une pluralité de motifs de formule =

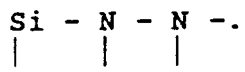

Dans le brevet américain 4730026 on propose des polymères comprenant des motifs récurrents

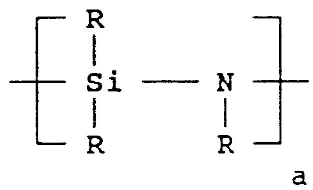

liés entre eux par au moins un pont de formule $-MR'_n-$, ledit ou lesdits ponts étant attachés aux atomes d'azote des motifs récurrents, le symbole M représentant un métal choisi dans les groupes III A, II B, IV B et II A du tableau périodique. Les polymères mis en oeuvre dans la préparation de polymères réticulés appartiennent à la famille des organosilazanes et à titre d'exemple, le brevet cite le poly (1,1 diméthylsilazane) ou encore un silazane polymérisé dérivé de méthylsilazane cyclique. D'une manière générale, ces divers polymères sont préparés à partir d'halogénosilane et d'ammoniac ou d'amine.

La présente invention a pour objet de nouveaux polymères réticulés, lesdits polymères comprenant une pluralité de motifs de formule

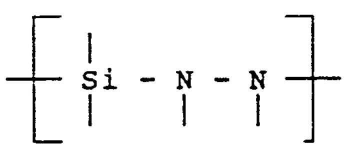

(I)

liés entre eux par au moins un pont de formule $-MR_n-$ (II), au moins deux des valences disponibles des atomes de silicium et d'azote étant utilisées pour établir les liaisons entre les motifs récurrents d'une même chaîne, les autres valences portant un atome d'hydrogène ou un radical alkyle, alcényle, cycloalkyle ou aryle pouvant renfermer jusqu'à 24 atomes de carbone, une au moins des valences disponibles d'un atome d'azote d'un motif étant utilisée pour la réticulaion avec un atome d'azote d'un autre motif par l'intermédiaire du pont $-MR_n-$, où M désigne un élément choisi dans les groupes III A, II B, IV B et II A de la classification périodique des éléments, n désigne un nombre égal ou inférieur à la valence de M - 2, les symboles R, qui peuvent être différents lorsque n est supérieur à 1, pouvant représenter un atome d'hydrogène ou d'halogène et notamment de chlore, un radical alkyle renfermant de 1 à 6 atomes de carbone, un radical amino, mono ou di alkylamino, un radical aryle, alkylaryle ou aralkyle renfermant jusqu'à 18 atomes de carbone.

L'invention a également pour objet un procédé de préparation des polymères réticulés définis ci-avant, ledit procédé consistant à faire réagir un polymère comportant une pluralité de motifs de formule I avec un composé de formule $MR_x$, dans laquelle M et R possèdent la signification donnée ci-avant et x la valence de M, pour autant que ledit composé soit capable de lier ou de déprotoner et lier les atones d'azote des motifs de formule I.

L'invention concerne encore les compositions réticulables constituées par le mélange avant réaction d'un ou plusieurs polymères comprenant une pluralité de motifs de formule I avec un composé $MR_x$.

L'invention concerne enfin les matériaux céramiques résultant de la pyrolyse des polymères réticulés définis précédemment.

Dans la formule I les substituants pouvant être portés par les atomes de silicium et d'azote peuvent notamment être choisis parmi les radicaux alkyle tels que méthyle, éthyle, propyle, butyle, les radicaux alcényle tels que vinyle et allyle, les radicaux aryle tels que phényle, tolyle, xylyle, naphtyle. On donne tout particulièrement la préférence dans l'invention aux produits comportant des motifs de formule I dans lesquels un atome d'azote porte un atome d'hydrogène et/ou l'atome de silicium porte un atome d'hydrogène ou un substituant vinyle.

Les polysilylhydrazines de formule I ne constituent pas en eux-mêmes des objets de l'invention et leur préparation est décrite par exemple dans la demande de brevet européen palliée sous le n° 351262. La présente invention s'applique également aux polymères comprenant des motifs de formule I associés à des motifs

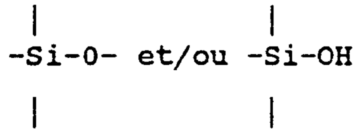

dont la préparation est décrite dans la demande de brevet européen publiée sous le n° 327773 le contenu des deux demandes précitées devant être considéré comme faisant partie de la présente.

Le composé de formule $MR_x$ peut être choisi dans une large famille de produits susceptibles de permettre la formation de liaison entre les motifs de formule I d'une chaîne à l'autre, par l'intermédiaire des atomes d'azote desdits motifs.

Parmi les éléments des groupes III A, II B, IV B et II A, on citera tout particulièrement B, Al, Zn, Cd, Ti, Zr, Hf et Mg. Dans la formule $MR_x$, R peut notamment représenter H, Cl, $-CH_3$, $-C_2H_5$, $-C_6H_5$, $-C_2H_4NH_2$, $-C_4H_8-C_6H_5$, $-NH_2$, $-NHR'$ et $-NR'_2$ où R' peut représenter l'un des radicaux alkyle ou aryle cités dans le cadre de R.

A titre préférentiel, le composé de formule $MR_x$ est choisi dans le groupe constitué par $Al(C_2H_5)_3$, $B(C_2H_5)_3$, $BH_3$, $Al(CH_3)_3$, $Zn(C_2H_5)_2$, $Mg(C_4H_9)_2$, $AlCl_3$, $Ti[N(C_2H_5)_2]_4$, $Al(C_2H_5)_2NH_2$, $ZrCH_2C(CH_3)_2C_6H_5$, $(CH_3)_2AlCl$, $CH_3AlCl_2$.

La réaction du composé comportant la pluralité de motifs de formule I avec le composé $MR_x$ peut être effectuée sans solvant, notamment lorsque ledit polymère I se trouve à l'état liquide ou solide et ledit composé $MR_x$ à l'état liquide ou gazeux. Lorsque tel n'est pas le cas, et d'une manière plus générale, cette réaction peut aussi se faire en milieu solvant.

A titre d'illustration des solvants utilisables, on citera notamment les composés halogénés tels que le chlorure de méthylène ; les éthers dialkyliques tel que l'éther diéthylique ; les éthers cycliques tels que le tétrahydrofuranne, le tétrahydropyranne, le 1,4- dioxanne ; les hydrocarbures aliphaliques tels que le pentane ou l'hexane ; les hydrocarbures aromatiques tels que le benzène, le toluène, le xylène.

D'une manière générale, la réaction peut s'effectuer à une température comprise entre - 40°C et 200°C. La durée de réaction peut, notamment en fonction de la température choisie pour celle-ci, aller de quelques dizaines de minutes à plusieurs heures, voire centaines d'heures.

Dans la préparation des polymères réticulés conformes à l'invention, on met en oeuvre les réactifs (composé comportant une pluralité de motifs de formule I et composé $MR_x$ en quantités telles que le rapport molaire silicium/élément M soit compris entre 1 et 100 et de préférence entre 3 et 40.

Les produits réticulés conformes à l'invention présentent des états physiques divers allant de liquides visqueux à des solides. Une pyrolyse, effectuée à une température généralement comprise entre 850°C et 1200°C conduit à un rendement en céramique (taux de résidu pyrolitique) nettement plus élevé que celui obtenu à partir du seul composé comportant les motifs de formule I.

Les exemples suivants illustrent l'invention :

**Exemples 1 à 11**

Dans ces exemples, on utilise les poly(organosilylhydrazines) de départ suivants :

A -

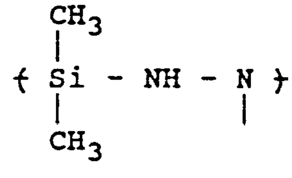

B - 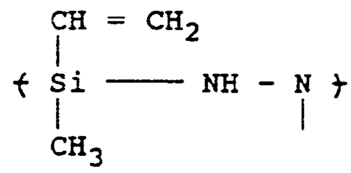

C - 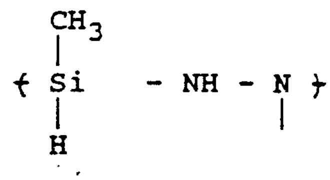

Ces polymères sont préparés par réaction des chlorosilanes correspondants [$(CH_3)_2$ Si $Cl_2$, ($CH_2$ = CH) $CH_3$ Si $Cl_2$ et $CH_3$ SiH $Cl_2$] avec de l'hydrazine dans les conditions suivantes:

**PRODUIT A**

La réaction a lieu dans un réacteur double enveloppe équipé d'un thermomètre, d'un système d'agitation, d'un condenseur (15°C) et d'une arrivée d'azote. Après purge du réacteur à l'azote, on y verse à 15°C 600 ml de toluène, 2,5 moles de triéthylamine et 1 mole de $(CH_3)_2SiCl_2$. Le réacteur étant agité et refroidi par de l'eau à 15°C, on y verse à débit constant, en 90 mn, 1,25 mole d'hydrazine. Après cette coulée, on porte la température du milieu réactionnel à 70°C pendant 6 heures et enfin, sous faible agitation, à 15°C pendant 15 heures. On filtre le précipité, on le lave par 900 ml de toluène sous pression d'azote et on recueille la solution claire. Le solvant et les restes de réactifs volatils sont éliminés à l'aide d'un évaporateur rotatif à 60°C sous pression progressivement réduite de 150 mm de mercure jusqu'à 0,5 mm de mercure en fin d'évaporation. On recueille enfin 69 g d'un produit liquide visqueux.

**PRODUIT B**

La réaction a lieu dans un réacteur double enveloppe équipé d'un thermomètre, d'un système d'agitation, d'un condenseur (15°C) et d'une arrivée d'azote. Après purge du réacteur à l'azote, on y verse à 15°C 600 ml de toluène, 2,4 moles de triéthylamine et 1 mole de $CH_3SiCHCH_2Cl_2$. Le réacteur étant agité et refroidi par de l'eau à 15°C, on y verse à débit constant, en 60 mn, 1,2 mole d'hydrazine. Après cette coulée, on porte la température du milieu réactionnel à 70°C pendant 6 heures et enfin, sous faible agitation, à 15°C pendant 15 heures. On filtre le précipité, on le lave par 900 ml de toluène sous pression d'azote et on recueille la solution claire. Le solvant et les restes de réactifs volatils sont éliminés à l'aide d'un évaporateur rotatif à 60°C sous pression progressivement réduite à 150 mm de mercure jusqu'à 0,5 mm de mercure en fin d'évaporation. On recueille enfin 88 g d'un produit liquide visqueux.

**PRODUIT C**

La réaction a lieu dans un réacteur double enveloppe équipé d'un thermomètre, d'un système d'agitation, d'un condenseur (15°C) et d'une arrivée d'azote. Après purge du réacteur à l'azote, on y verse à 15°C 600 ml de toluène, 2,4 moles de triéthylamine et 1 mole de $CH_3SiHCl_2$. Le réacteur étant agité et refroidi par de l'eau à 15°C, on y verse à débit constant, en 60 mn, 1,2 mole d'hydrazine. Après cette coulée, on porte la température du milieu réactionnel à 70°C pendant 6 heures et enfin, sous faible agitation, à 15°C pendant 15 heures. On filtre le précipité, on le lave par 900 ml de toluène sous pression d'azote et on recueille la solution claire. Le solvant et les restes de réactifs volatils sont éliminés à l'aide d'un évaporateur rotatif à 60°C sous pression progressivement réduite à 150 mm de mercure jusqu'à 0,5 mm de mercure en fin d'évaporation. On recueille enfin 51 g d'un produit liquide solide.

Les réactifs utilisés sont les suivants :

a - Al $(C_2H_5)_3$
b - $NH_2Al(C_2H_5)_2$
c - Ti $[N(C_2H_5)_2]_4$
d - $(CH_3)_2$ Al Cl

Dans tous ces exemples, on utilise comme solvant le chlorure de méthylène et la réaction est effectuée à température ambiante.

La pyrolyse de produit réticulé et du produit de départ (témoin) est effectuée sous argon à 1000°C.

Dans le tableau qui suit, on indique :

– le polymère de départ (A, B ou C)
– le réactif (a, b, c ou d)
– le rapport molaire Si/M (M = élément)
– les caractéristiques physiques du produit réticulé (aspect, solubilité dans l'hexane)
– le taux de résidu (rendement pyrolitique) du produit réticulé
– le taux de résidu du polymère de départ.

| Ex. | Polymère de départ | Réactif | Rapport molaire Si/M | Caractéristiques physiques | Pyrolyse 1000 °C Taux de résidu % | |
|---|---|---|---|---|---|---|
| | | | | | Produit réticulé | Témoin |
| 1 | A | a | 5 | visqueuse soluble | 25 | 2 |
| 2 | A | a | 2 | cire - peu soluble | 45 | 2 |
| 3 | B | a | 5 | solide insoluble | 67 | 58 |
| 4 | C | a | 6 | solide | 75 | 62 |
| 5 | A | b | 16 | très visqueux, peu soluble | 9 | 2 |
| 6 | B | b | 4 | cire - peu soluble | 65 | 58 |
| 7 | C | b | 18 | poudre insoluble | 78 | 62 |
| 8 | A | c | 23 | poudre insoluble | 29 | 2 |
| 9 | B | c | 17 | poudre insoluble | 74 | 58 |
| 10 | C | c | 23 | poudre insoluble | 85 | 62 |
| 11 | A | d | 5 | visqueux soluble | 15 | 2 |

**Revendications**

1. Poly(organosilylhydrazines) réticulés, caractérisés en ce qu'ils comprennent une pluralité de motifs de formule

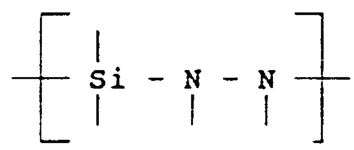

(I)

liés entre eux par au moins un pont de formule $-MR_n-$, au moins deux des valences disponibles des atomes de silicium et d'azote étant utilisées pour établir les liaisons entre les motifs récurrents d'une mêne chaîne, les autres valences portant un atome d'hydrogène ou un radical alkyle, alcényle, cycloalkyle ou aryle pouvant renfermer jusqu'à 24 atomes de carbone, une au moins des valences disponibles d'un atome d'azote d'un motif étant utilisée pour la réticulaion avec un atome d'azote d'un autre motif par l'intermédiaire du pont $-MR_n-$, où M désigne un élément choisi dans les groupes III A, II B, IV B et II A de la classification périodique des éléments, n désigne un nombre égal ou inférieur à la valence de M - 2, les symboles R, qui peuvent être différents lorsque n est supérieur à 1, pouvant représenter un atome d'hydrogène ou d'halogène et notamment de chlore, un radical alkyle renfermant de 1 à 6 atomes de carbone, un radical amino, mono ou di alkylamino, un radical aryle, alkylaryle ou aralkyle renfermant jusqu'à 18 atomes de carbone.

2. Poly(organosilylhydrazines) selon la revendication 1, caractérisés en ce que dans les motifs de formule I, un atome d'azote porte un atome d'hydrogène et/ou l'atome de silicium porte un atome d'hydrogène ou un substituant vinyle.

3. Poly(organosilylhydrazines) selon l'une quelconque des revendications 1 ou 2, caractérisés en ce que dans la formule $-MR_n-$, M désigne un élément choisi dans le groupe constitué par B, Al, Zn, Cd, Ti, Zr, Hf et Mg.

4. Procédé de préparation des poly(organosilylhydrazines) selon l'une quelconque des revendications 1 à 3, caractérisé en ce qu'il consiste à faire réagir un polymère comportant une pluralité de motifs de formule I avec un composé de formule $MR_x$, dans laquelle M et R possédent la signification donnée ci-avant et x la valence de M, pour autant que ledit composé $MR_x$ soit capable de lier ou de déprotoner et lier les atomes d'azote des motifs de formule I.

5. Procédé selon la revendication 4, caractérisé en ce que le composé $MR_x$ est choisi dans le groupe constitué par $Al(C_2H_5)_3$, $B(C_2H_5)_3$, $BH_3$, $Al(CH_3)_3$, $Zn(C_2H_5)_2$, $Mg(C_4H_9)_2$, $AlCl_3$, $Ti[N(C_2H_5)_2]_4$, $Al(C_2H_5)_2NH_2$, $ZrCH_2C(CH_3)_2C_6H_5$, $(CH_3)_2$ Al Cl.

6. Compositions réticulables comprenant un polymère comportant une pluralité de motifs de formule I et un composé de formule $MR_x$, les symboles de la formule I et de la formule $MR_x$ ayant les significations données précédemment.

7. Les matériaux céramiques résultant de la pyrolyse des poly(organosilylhydrazines) réticulés selon l'une quelconque des revendications 1 à 3.

Office européen des brevets

# RAPPORT DE RECHERCHE EUROPEENNE

Numero de la demande

EP 91 40 3369

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 262 914 (DUPONT)<br>* Revendications 1-9; page 3, lignes 25-31 *<br>--- | 1 | C 08 G 77/62<br>C 04 B 35/58 |
| A | US-A-4 886 860 (M. ARAI)<br>* Revendication 1; colonne 4, lignes 32-48 *<br>--- | 1 | |
| A | EP-A-0 344 870 (TOA NENRYO KOGYO)<br>* Revendications 1-7 *<br>----- | 1 | |
| | | | **DOMAINES TECHNIQUES RECHERCHES (Int. Cl.5)** |
| | | | C 08 G<br>C 07 F<br>C 08 L |

Le présent rapport a été établi pour toutes les revendications

| Lieu de la recherche | Date d'achèvement de la recherche | Examinateur |
|---|---|---|
| LA HAYE | 14-04-1992 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)